Europäisches Patentamt

European Patent Office

Office européen des brevets

(11) Publication number: **0 163 614**
**A2**

## (12) EUROPEAN PATENT APPLICATION

(21) Application number: 85830118.7

(51) Int. Cl.⁴: **B 29 C 45/24**

(22) Date of filing: 20.05.85

(30) Priority: 31.05.84 IT 6755884

(43) Date of publication of application:
04.12.85 Bulletin 85/49

(84) Designated Contracting States:
AT BE CH DE FR GB IT LI LU NL SE

(71) Applicant: Beolchi, Mario
Piazza Dante Livio Bianco 8
I-10137 Torino(IT)

(71) Applicant: Sacco, Gianmario
Corso Re Umberto 54
I-10128 Torino(IT)

(72) Inventor: Beolchi, Mario
Piazza Dante Livio Bianco 8
I-10137 Torino(IT)

(74) Representative: Buzzi, Franco et al,
c/o Jacobacci-Casetta & Perani S.p.A. Via Alfieri, 17
I-10121 Torino(IT)

(54) Filter for injector nozzles particularly for apparatus for the injection moulding of plastics material, and an injector nozzle provided with such a filter.

(57) Filter for injector nozzles for plastics materials comprising a hollow body (10) having an axial inlet passage (24) and a series of axial outlet passages (26) disposed around the inlet passage and communicating therewith through a plurality of calibrated annular filter openings (18).

FIG. 3

EP 0 163 614 A2

0163614

Filter for injector nozzles particularly for apparatus for the injection moulding of plastics material, and an injector nozzle provided with such a filter.

The present invention relates to the filtering of plastics materials, particularly in injection moulding apparatus.

In particular the invention relates to filters which can be associated with injector nozzles used in such apparatus for removing any contaminating particles and extraneous bodies from the plastics material conveyed in the fluid state towards the moulds.

According to the prior art such filters are generally constituted by plates or sleeves having perforations through which the plastics material flows.

The formation of such perforations requires precise machining which involves relatively high production costs. Furthermore the perforations readily become blocked, so that such filters must be replaced and cleaned frequently.

In order to avoid this disadvantage, a filter has been proposed in Italian Patent No. 1,011,925 which is constituted by a cylindrical body having axial grooves in its lateral surface which are alternately closed at one end and at the opposite end of the body and which communicate with each other through transverse recesses arranged to retain any impurities in the plastics material directed towards the nozzle in use.

A similar filter had already also been proposed in the field of the extrusion of plastics material in U.K. Patent No. 1,230,563, which also provides a device for removing impurities by rotation of the filter body.

These grooved filters, although being simpler and more

- 2 -

economical to make than previous perforated plate filters, have the disadvantages of requiring precise assembly in the body of the injector nozzle and of causing a considerable pressure drop in use.

A further serious disadvantage of grooved filters, which is, however, also applicable to perforated plate filters, lies in the fact that the useful filter areas defined by the transverse recesses in grooved filters and by the apertures in plate filters are in any case rather small.

The object of the present invention is to avoid these disadvantages and to provide a filter for injector nozzles for plastics materials having a considerably larger filter area so as to ensure more effective and certain filtering action with lower pressure drop.

A further object of the invention is to provide a filter for injector nozzles which is simple and economical to manufacture and which can be assembled without special skill.

A further object of the invention is to provide a filter for injector nozzles in which the removal of the filtered material may be carried out rapidly and easily and substantially without the need to remove the filter from the nozzle.

The filter according to the invention is characterised in that it comprises a hollow body having an axial inlet passage intended to be closed at one end of the body, an axial outlet passage surrounding the inlet passage and intended to be closed at the other end of the body and a plurality of calibrated annular filter openings which interconnect the inlet passage and the outlet passage between the respective open ends of these passages.

The annular filter openings of the filter according to the invention ensure considerably greater useful filter areas, even up to twice those of the known filters mentioned above, for a given size of the filter body.

Furthermore the shape of the filter according to the invention, as well as being extremely simple and economic to manufacture, allows an appreciable reduction in the pressure drop in operation.

According to a preferred embodiment of the invention, the outlet passage is constituted by ducts arranged in a ring coaxial with the inlet passage, and the said annular filter openings are also coaxial with the inlet passage.

In this case the body of the filter is to advantage formed by a plurality of stacked discs each of which has a central aperture constituting an axial portion of the inlet passage and a ring of peripheral apertures constituting axial portions of the outlet ducts, and the central aperture of each disc has a counterbore on one face which opens into the said apertures and forms one of the said annular filter openings with the opposite face of the adjacent disc.

Normally the axial dimension of these filter apertures is between 0.3 and 1 mm according to the type of application of the filter.

According to a variant of the filter according to the invention, the said annular filter openings have respective axes arranged transverse the axis of the

- 4 -

inlet passage

In this case the body is conveniently constituted by an inner cylindrical sleeve the cavity whereof defines the said inlet passage and the wall of which has a plurality of radial recesses communicating with the inlet passage through respective radial passages, and an outer cylindrical sleeve coaxially surrounding the inner sleeve and forming axial channels defining the outlet passage, the inner sleeve having open zones and solid zones intercalated with the open zones and defining, together with the radial cavities of the inner sleeve, the said annular filter openings.

The invention also provides an injector nozzle for injection moulding apparatus for plastics material provided with the filter having the characteristics defined above.

The invention will now be described in detail with reference to the appended drawings, provided purely by way of non-limiting example, in which:

Figure 1 is a partially-exploded perspective view of a filter for injection nozzles for plastics materials according to a preferred embodiment of the invention;

Figure 2 is a front elevational view taken in the direction of arrow II in Figure 1,

Figure 3 is a cross sectional view taken on the line III-III of Figure 2;

Figure 4 is a schematic partially sectioned view illustrating an injector nozzle for injection moulding apparatus for plastics materials provided with a filter according to Figures 1 to 3;

Figure 5 is a perspective view of a variant of the filter according to the invention;

Figure 6 is a transverse section of Figure 5, and

Figure 7 is a view similar to Figure 4 illustrating an injector nozzle for injection moulding apparatus for plastics materials provided with a filter according to Figures 5 and 6.

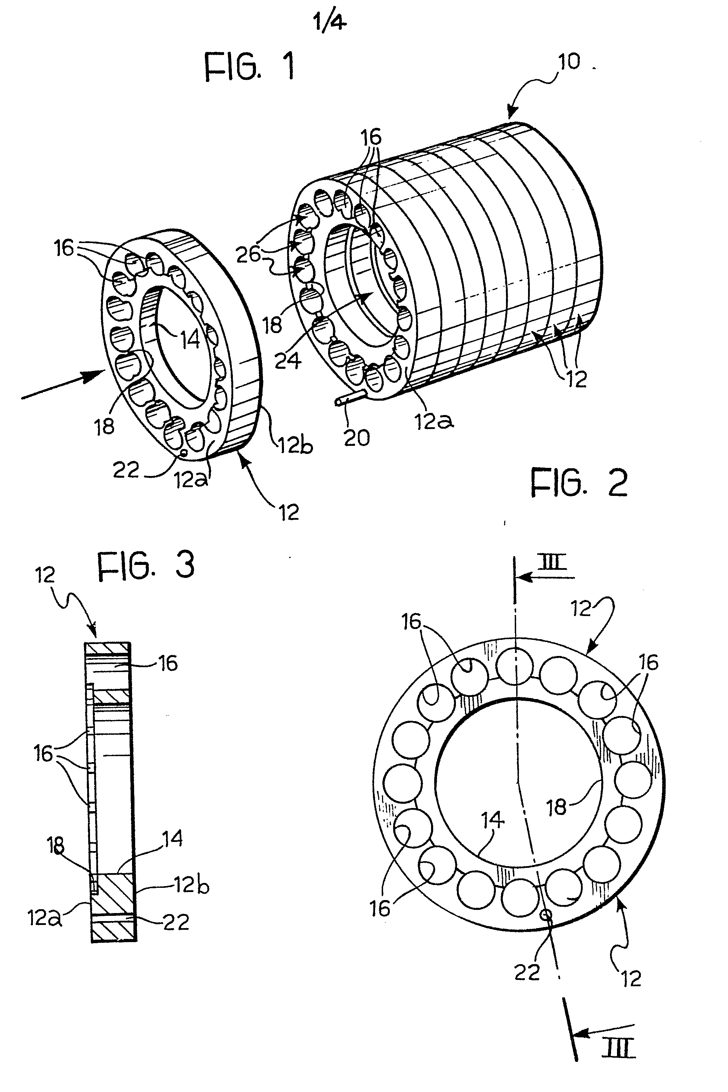

The filter illustrated in Figures 1 to 3 comprises a hollow body 10 formed by a series of apertured metal discs 12 disposed in face-to-face contact with each other.

Each disc 12 has a central circular through aperture 14 and a series of axial through apertures 16 formed closely adjacent each other in a ring concentric with the central aperture 14.

The central aperture 14 has a counterbore 18 of limited axial extent, in one of the faces 12a of the disc 12 which opens into the aperture 16. In the assembled condition of the body 10, the discs 12 are all oriented in the same manner so that the face 12a of each disc 12 faces the opposite face 12b of the successive disc 12. Furthermore the discs 12 are angularly in register with each other, for example by means of a simple rod 20 inserted through corresponding holes 22 arranged in mutual alignment in such a manner that the apertures 16 of each disc 12 are located in angular correspondence with the apertures 16 of the adjacent discs 12.

Thus the apertures 14 of the various discs 12 form the cavity of the body 10 and in practice define a cylindrical central passage 24.

The apertures 16 form a ring of axial peripheral ducts 26 which communicate with the central passage 24 through the counterbores 18. In practice these counterbores 18 thus form the annular calibrated openings coaxial with the passage 24, through which, as will become clearer below, the plastics material to be injected which is fed to the filter through the passage 24 is drawn into the ducts 26, depositing any contaminating particles and extraneous material which are retained by the calibrated openings 18.

Clearly the number and dimensions of the discs 12 and their apertures may vary in dependence on the requirements of use.

By way of example, dimensional parameters are given below for a filter constituted by ten discs 12 each having an outer diameter of 35 mm and an axial thickness of 5 mm;

number of apertures 16: sixteen
diameter of apertures 16: 4 mm
diameter of apertures 14: 20 mm
diameter of counterbores 18: 25 mm
axial dimension of counterbores 18: 0.3 mm.

It should be noted that the fineness of the filtering depends clearly on the axial dimension of the counterbores 18. This dimension may vary generally from a minimum of 0.3 mm to a maximum of 1 mm.

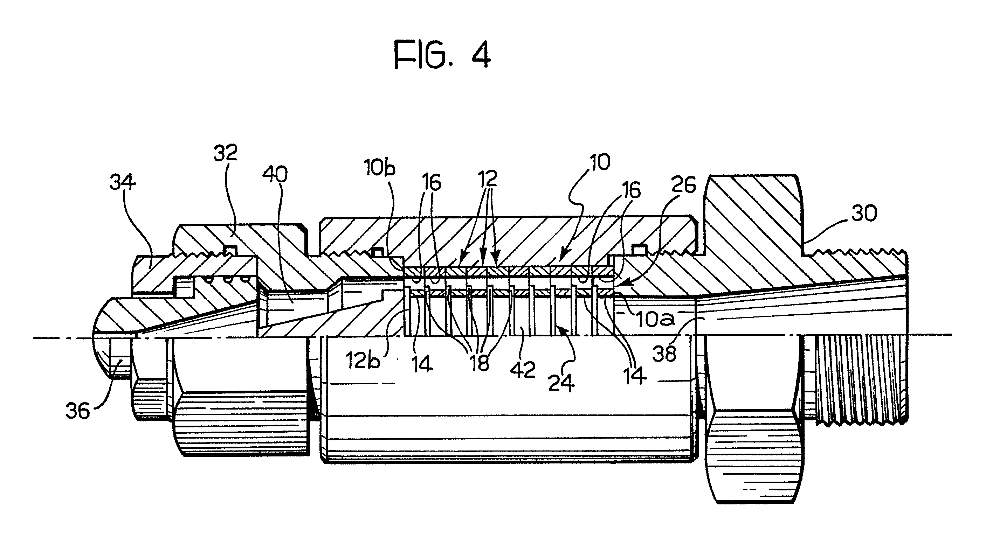

Figure 4 illustrates one example of use of the filter 10 with an injector nozzle for apparatus for the injection moulding of plastics materials.

The nozzle comprises a tubular body 28 closed at its ends by a removable tubular head 30 and an annular element 32 respectively, the latter carrying a hollow support 34 within which the injector nozzle 36 itself is inserted.

The cavity of the head 30 defines an inlet duct 38 and the element 32 defines an annular outlet duct 40 communicating with the nozzle 36.

A cavity 42 is defined within the body 28 between the head 30 and the element 32 the body 28. Within the cavity 42 there is inserted and axially locked the filter body 10 with the discs 12 stacked axially together and with their ends, indicated 10a and 10b respectively disposed in contact with the inner end of the tubular head 30 and with the inner end of the annular element 32 respectively.

As is clearly seen from Figure 4, the arrangement is such that the central passage 24 of the filter 10 defined by the apertures 14 in the discs 12 communicates with the inlet duct 38 at the end 10a while it is closed at the end 10b, and the ducts 26 defined by the various apertures 16 communicate with the outlet duct 40 at the end 10b of the body 10 while they are closed at the end 10a. In practice the flow of the plastics material entering the body 10 through the duct 38 and leaving, in use, from the injector nozzle 36 is forced through the calibrated filter openings 18 through which the passage 24 communicates with the ducts 26. These openings 18 thus allow any impurities or extraneous particles in the plastics material to be stopped effectively and retained before the plastics material is injected into the moulds.

By virtue of the annular configuration of the openings 18, the useful filter area of the filter 10 is much greater than, and is as much as twice that available in conventional filters of the same dimensions.

Furthermore the filter according to the invention lends itself particularly simply and easily to automatic cleaning and the removal of the impurities without the need to remove it from the nozzle, since it is possible to free the passage 24 from the end 10b of the body 10.

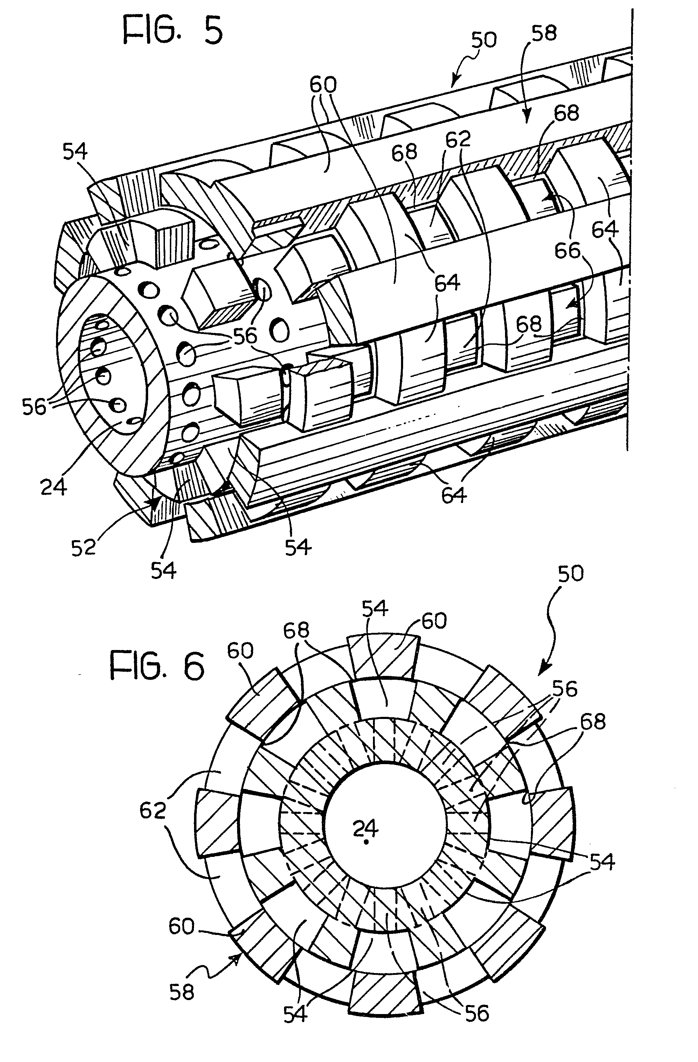

The variant of the filter illustrated in Figures 5 and 6 differs from the embodiment previously described essentially in that the annular filter openings are not coaxial with the inlet passage but have respective axes extending radially relative to the inlet passage.

In effect, the filter body, indicated 50, is constituted by an inner cylindrical sleeve 52 the cavity of which defines the inlet passage 24 and the wall of which has a plurality of radial recesses 54 which communicate with the cavity 24 through respective radial apertures 56. The recesses 54 are close together and distributed regularly in rows parallel to the axis of the cavity 24.

The body 50 also includes an outer cylindrical sleeve 58 which coaxially surrounds the inner sleeve 52 and the inner diameter whereof is slightly greater than the outer diameter of the sleeve 52.

The sleeve 58 is in practice constituted by a series of angularly spaced axial members 60 which define outlet channels 62 and which are interconnected by recessed sectors 64 which, with the members 60, form open zones 66.

The arrangement and dimensions of the members 60 and of the sectors 64 are such that these define a plurality of calibrated annular filter openings 68 with the radial recesses 54 of the inner sleeve 52.

It follows that the communication between the inlet passage 24 and the outlet channels 62 occurs through the radial apertures 56, the recesses 54, the annular filter openings 68 and the open zones 66.

It is clear that the number and dimensions of the annular openings 68 may vary in dependence on the requirements of use. In particular, the width of these openings 68 may in general be between a minimum of 0.3 mm and a maximum of 1 mm.

Although in the example illustrated the openings 68 are rectangular, it should be noted that their shape could be different, for example, circular.

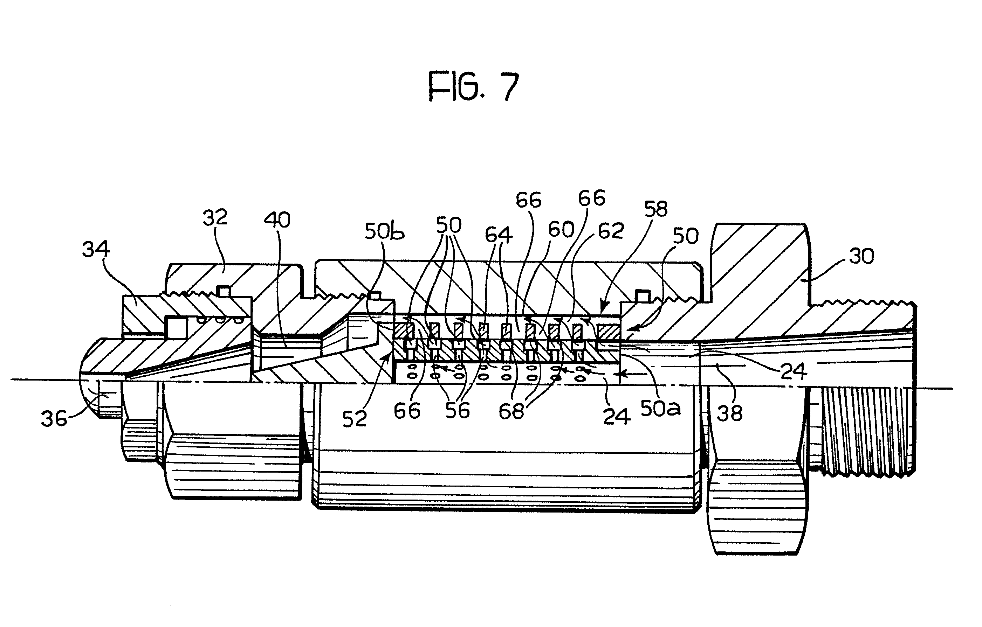

Figure 7 illustrates an example of use of the filter 50 with an injection nozzle for apparatus for the injection moulding of plastics materials. Since the nozzle is entirely similar to that illustrated in Figure 4, identical or similar parts to those already described are indicated by the same reference numerals.

As is seen, the arrangement is such that the central passage 24 of the filter 50 communicates with the inlet duct 38 at the end 50a while it is closed at the end 50b, and the channels 62 communicate with the outlet duct 40 at the end 50b while they are closed at the end 50a.

In use, the flow of the plastics material entering the body 50 through the duct 38 and leaving by the injector nozzle 36 occurs forcedly through the calibrated annular filter openings 68 which effectively retain any impurities in the plastics material.

Again in this case the useful filter area is considerably greater than and even up to twice that available in conventional filters of the same dimensions.

Finally, it should be noted that, to facilitate its manufacture the body 50, the inner sleeve 52, instead of being a monolithic member, could be formed from a series of separate, stacked rings connected together in angular registration by an axial retaining member.

Naturally, the constructional details and forms of embodiment may be varied widely with respect to that described and illustrated, without thereby departing from the scope of the present invention.

0163614

- 11 -
<u>CLAIMS</u>

1. Filter for injector nozzles for plastics material, characterised in that it comprises a hollow body (10, 50) having an axial inlet passage (24) intended to be closed at one end (10b, 50b) of the body (10, 50), an axial outlet passage (26, 62) surrounding the inlet passage (24) and intended to be closed at the other end (10a, 50a) of the body (10, 50) and a plurality of calibrated annular filter openings (18, 68) which interconnect the inlet passage (24) and the outlet passage (26, 62) between the respective open ends of these passages.

2. Filter according to Claim 1, characterised in that the outlet passage is formed by a ring of axial ducts (26, 62) coaxial with the inlet passage (24).

3. Filter according to Claim 2, characterised in that the annular filter openings (18) are coaxial with the inlet passage (24).

4. Filter according to Claim 3, characterised in that the body (10) is formed by a plurality of packed discs (12) each of which has a central aperture (14) constituting an axial portion of the inlet passage (24) and a ring of peripheral apertures (16) constituting axial portions of the outlet ducts (26), and on one face (12a) of the disc (12) the central aperture (14) of each disc (12) has a counterbore (18) opening into the said peripheral apertures (16) and forming, with the opposite face (12b) of the adjacent disc (12), one of the said annular filter openings.

5. Filter according to Claim 4, characterised in that the counterbore (18) of each disc (18) has an axial dimension of substantially between 0.3 and 1mm.

6. Filter according to Claim 4, characterised in that the said discs (12) are interconnected by angular retaining and centering means (20).

7. Filter according to Claim 1 or Claim 2, characterised in that the said annular filter openings (68) have respective axes extending transverse the axis of the inlet passage (24).

8. Filter according to Claim 7, characterised in that the body (50) is formed by a cylindrical inner sleeve (52) the cavity of which defines the said inlet passage (24) and the wall of which has a plurality of radial recesses (54) communicating with the inlet passage (24) through respective radial passages (56), and a cylindrical outer sleeve (58) which coaxially surrounds the inner sleeve (52) and forms axial channels (62) defining the outlet passage, the outer sleeve (58) having solid zones (60, 64) and open zones (66) intercalated with the solid zones and defining, together with the radial recesses (54) of the inner sleeve (52), the said annular filter openings (68).

9. Filter according to Claim 8, characterised in that the annular filter openings (68) are polygonal in shape.

10. Filter according to Claim 8, characterised in that the annular filter openings (68) are circular in shape.

11. Filter according to Claim 7, characterised in that the annular filter openings (68) have a width of between 0.3 and 1 mm.

12. Injector nozzle for apparatus for the injection moulding of plastics materials, including a body having a cavity inserted in the flow path for the plastics material and containing a filter arranged to retain any impurities present in the plastics material, characterised in that the filter is constituted by a hollow body (10, 50) having an axial inlet passage (24) open towards the inlet of the cavity and closed at the opposite end, an axial outlet passage (26, 62) surrounding the inlet passage (24) and open towards the outlet of the cavity and closed at the opposite end, and a plurality of calibrated annular filter openings (18, 68) interconnecting the inlet passage (24) and the outlet passage (26, 62) between the respective open ends of these passages.

13. Nozzle according to Claim 12, characterised in that the outlet passage is constituted by a ring of axial ducts (26, 62) coaxial with the inlet passage (24).

14. Nozzle according to Claim 13, characterised in that the annular filter openings (18) are coaxial with the inlet passage (24).

15. Nozzle according to Claim 14, characterised in that the body (10) is formed by a plurality of packed discs (12) each of which has a central aperture (14) constituting an axial portion of the said inlet passage (24), and a ring of peripheral apertures (16) concentric with the central aperture (44) and constituting axial portions of the said outlet ducts (26), and the central aperture (14) of each disc (12) has a counterbore (18) on the one face (12a) of the disc (12) which opens into the said peripheral apertures (16) and which, with the opposite face (12b) of the adjacent disc (12), forms one of the said annular filter openings (18).

16. Nozzle according to Claim 15, characterised in that the annular filter openings (18) have axial dimensions of between 0.3 and 1mm.

17. Nozzle according to Claim 16, characterised in that the said discs (12) are interconnected by angular retaining and centering means (20).

18. Nozzle according to Claim 13, characterised in that the annular filter openings (68) have respective axes extending transverse the axis of the inlet passage (24).

19. Filter according to Claim 18, characterised in that the body (50) is constituted by an inner cylindrical sleeve (52) the cavity whereof defines the said inlet passage (24) and the wall of which has a plurality of radial recesses (54) communicating with the inlet passage (24) through respective radial passages (56), and an outer cylindrical sleeve (58) coaxially surrounding the inner sleeve (52) and forming axial channels (62) defining the outlet passage, the outer sleeve (58) having solid zones (60, 64) and open zones (66) intercalated with the solid zones and defining, together with the radial cavities (54) of the inner sleeve (52), the said annular filter openings (68).

20. Nozzle according to Claim 19, characterised in that the annular filter openings (68) are polygonal in shape.

21. Nozzle according to Claim 19, characterised in that the annular filter openings (68) are circular in shape.

22.  Nozzle according to Claim 18, characterised in that the annular filter openings (68) have a size of  between 0.3 and 1 mm.

0163614

FIG. 1

FIG. 2

FIG. 3

0163614

FIG. 4

FIG. 5

FIG. 6

FIG. 7

0163614